# EUROPÄISCHE PATENTSCHRIFT

(11) **EP 2 755 846 B1**
(45) Veröffentlichungstag und Bekanntmachung des Hinweises auf die Patenterteilung: **22.04.2015**
(21) Anmeldenummer: 12731320.3
(22) Anmeldetag: 01.06.2012
(51) Int. Cl.: B60L 11/18, G07F 15/00, G06Q 20/38, H04L 29/06, G06Q 20/32, H04L 9/32

(54) **VERFAHREN UND VORRICHTUNG ZUR ZUORDNUNG EINES VON EINER LADESTATION ERFASSTEN MESSWERTES ZU EINER TRANSAKTION**
METHOD AND DEVICE FOR ALLOCATING A PARAMETER VALUE DETECTED BY A CHARGING STATION TO A TRANSACTION
PROCÉDÉ ET DISPOSITIF POUR L'ATTRIBUTION DES DONNÉES DE MESURE DÉTECTÉES PAR UNE STATION DE CHARGE À UNE TRANSACTION

(30) Priorität: 15.09.2011 DE 102011113354
(43) Veröffentlichungstag der Anmeldung: 23.07.2014
(73) Patentinhaber: RWE AG, 45128 Essen (DE)
(72) Erfinder: GAUL, Armin, 59379 Selm (DE)
(74) Vertreter: Cohausz & Florack
(86) Internationale Anmeldenummer: PCT/EP2012/060353
(87) Internationale Veröffentlichungsnummer: WO 2013/037516

(56) Entgegenhaltungen:
- US-A1- 2009 174 365
- US-A1- 2009 177 595
- US-A1- 2009 313 104
- US-A1- 2010 161 482
- US-A1- 2011 193 522

## Beschreibung

Der Gegenstand betrifft ein Verfahren als auch eine Vorrichtung zur Zuordnung eines von einer Ladestation erfassten Messwertes zu einer Transaktionskennung.

Die Verbreitung elektrisch betriebener Fahrzeuge wird vermutlich in naher Zukunft rapide zunehmen. Mit der Verbreitung von Elektrofahrzeugen, die mit einem Elektromotor betrieben werden, sollte jedoch sichergestellt werden, dass diese in einfachster Weise mit Energie versorgt werden können. Hierzu sollte eine funktionierende Infrastruktur zur Verfügung gestellt werden.

Insbesondere sollte die Möglichkeit gegeben werden, in öffentlichen Bereichen Energie für Elektrofahrzeuge zu beziehen. Bei den bisher verfügbaren Reichweiten von Elektrofahrzeugen zwischen 50 und einigen 100 km ist es angebracht, dass auch außerhalb des häuslichen Umfeldes ein Laden der Fahrzeuge möglich ist. Hierfür sollten in öffentlichen Bereichen Ladestationen zur Verfügung gestellt werden, um eine stete Verfügbarkeit von Energie für Elektrofahrzeuge durch ein Versorgungsnetz zur Verfügung zu stellen. Diese Verfügbarkeit von elektrischer Energie bzw. von Ladestationen ist ein entscheidendes Kriterium für die Akzeptanz von Elektrofahrzeugen.

Bei in öffentlichen Bereichen installierten Ladestationen muss jedoch sichergestellt werden, dass der Kunde bezogene Energie bezahlt. Auch sollte sichergestellt werden, dass der Kunde vor dem Beziehen elektrischer Energie Kenntnis über die zu erwartenden Kosten hat. Entsprechend des herkömmlichen Tankvorgangs sollte der Kunde unmittelbar vor dem Aufladen der Batterie wissen, welche Kosten ihn erwarten. So sollte dem Kunden beispielsweise der Preis für eine Kilowattstunde bekannt sein. Darüber hinaus sollte sichergestellt sein, dass der Kunde auch tatsächlich nur die Energiemenge in Rechnung gestellt bekommt, die er auch bezogen hat. Schließlich muss sichergestellt sein, dass der Kunde auch nur für solche Tankvorgänge bezahlt, die er auch tatsächlich bewirkt hat. Es muss sicher verhindert werden, dass Messdaten einzelner Tankvorgänge mehreren Kunden parallel in Rechnung gestellt werden.

Insbesondere im Fall der Elektromobilität werden Ladevorgänge von unterschiedlichsten Kunden an ein und derselben Ladestation vorgenommen. Die Ladevorgänge stehen weder unter der ständigen Kontrolle des Messstellenbetreibers noch des Kunden, so dass sichergestellt werden muss, dass die von der Ladestation bzw. dem Messgerät in der Ladestation aufgenommenen Messwerte unverfälscht und eindeutig einem Kunden zuordenbar an eine Abrechnungszentrale übermittelt werden.

Somit ist besonders auf die Integrität, Authentizität, Überprüfbarkeit und Zuordenbarkeit der zwischen Fahrzeug und Ladestation und/oder zwischen Ladestation und Abrechnungszentrale übertragenen Abrechungsdaten zu achten. Zum Einen ist es notwendig, dass die Daten über die Lademenge unverfälscht bleiben. Zum Anderen ist für Abrechnungszwecke eine Übertragung von Messdaten (Abrechnungsdaten) von der Ladestation an ein Abrechnungssystem vor Manipulationen zu sichern. Der Nutzer muss sicherstellen und überprüfen können, dass ihm nur die von ihm bezogene Energie in Rechnung gestellt wird.

Bei einer anonymem Abrechnung ohne jegliche Vertragsbindung wie z.B. bei der klassischen Tankstelle ist dies jedoch schwierig. Zum einen muss sichergestellt werden, dass ein Nutzer die bezogene Energie zahlt, andererseits muss sowohl der Nutzer als auch der Energielieferant vor Manipulationen geschützt werden.

In Deutschland unterliegt die Messwertebereitstellung für diese Abrechnungen unabhängig vom gewählten Verfahren dem Eichrecht, das sowohl Verbraucher als auch Händler durch die Bereitstellung richtiger Abrechnungsgrundlagen vor Betrügern schützt.

Da jedoch zeitvariable Tarife für die Stromlieferung gefordert werden, um eine höhere Einspeisung aus regenerativen Quellen mit monetären Anreizsystemen flankieren zu können, muss sichergestellt werden, dass der Kunde Kenntnis über einen variablen Tarif erhält.

Einen zeitvariablen Tarif darf es nur dann geben, wenn er in der Auszeichnung darstellbar und dann auch noch sehr einfach für den Kunden nachvollziehbar ist. Da aber der Ladevorgang sehr lange dauert, ist es dem Kunden kaum zuzumuten, an der Ladesäule zu warten, um Tarifwechsel zu beobachten. Nebenbei besteht die Notwendigkeit der Transparenz nicht nur für den Kunden, sondern auch für den Energielieferanten, so dass im Sinne des Eichrechts auch der Energielieferant über eine Einsichtsmöglichkeit auf die Belege haben muss, weshalb das Eichrecht für solche Messungen, bei der nicht beide Parteien anwesend sind, eine eichrechtlich gesicherte Speicherung der Belege fordert. Dokumente US20100161482 und US 20090313104 offenbaren Verfahren zur Transaktionskennung beim Laden eines Fahrzeugs durch einer Ladestation, gemäss dem Stand der Technik. Datenpakete, umfassend Daten über die gespeiste Lademenge und die Fahrzeugsidentifikation, werden an eine Abrechnungszentrale übermittelt.

Daher lag dem Gegenstand die Aufgabe zugrunde, ein Verfahren und eine Vorrichtung zur Verfügung zu stellen, die einem vorzugsweise anonymen Kunden und dem Energielieferant eine transparente und nachvollziehbare Rechnung je Verkaufsvorgang zur Verfügung stellt, insbesondere dann, wenn ein zeitvariabler Tarif abgerechnet werden soll.
Diese Aufgabe wird gegenständlich durch ein Verfahren nach Anspruch 1 oder 8 sowie eine Vorrichtung nach Anspruch 13 oder 14 gelöst.

Beim Ladevorgang bezieht das Elektrofahrzeug elektrische Energie von der Ladestation. In der Ladestation wird diese elektrische Energie mit Hilfe eines Messgerätes (Zählers) gemessen. Während des Ladevorgangs als auch beim Abschluss des Ladevorgangs ist es notwendig, dass die bezogene Energiemenge für Abrechungszwecke erfasst wird und der Nutzer der Ladestation Kenntnisse über die bezogene Energiemenge erhält. Die Messung an sich wird in der Regel nicht zu beanstanden sein, da diese durch einen geeichten Zähler vorgenommen wird. Daher ist lediglich sicherzustellen, dass die Messwerte gesichert der Abrechnungszentrale zugeführt werden, wobei eine eindeutige, unverfälschbare Zuordnung zu einer Transaktion gewährleistet sein muss. Andererseits muss ebenfalls sichergestellt sein, dass der Nutzer die bezogene Energie auch bezahlt.

Es wird davon ausgegangen, dass der Kunde auf geeignetem Wege Kenntnis von der Möglichkeit der Nutzung eines zeitvariablen Tarifs an der Ladesäule erlangt hat, und sich bewusst für diesen entschieden hat.

In diesem Fall muss der Nutzer, um eine Abrechnung zu ermöglichen, seine Zahlungsbereitschaft signalisieren und Informationen über einen Zahlungsweg zur Verfügung stellen.

Die Zahlungsbereitschaft kann beispielsweise dadurch angezeigt werden, dass der Nutzer über Kreditkarte, Prepaid-Karte, einen Geldeinwurf an der Ladestation, einen Telefonanruf oder dergleichen angibt, dass er die Energie bezahlen möchte. Diese Zahlungsinformation kann unmittelbar an der Ladestation gewonnen werden, z.B. über einen Kreditkartenleser, oder über Telefon, z.B. über eine Telefonnummer oder auch eine Kurznachricht, in der z.B. die IMSI (Internation Mobile Subscirber Identification) angegeben ist. Über diese Information, die bei z.B. einer Prepaid Mobilfunkkarte anonym ist, kann eine Abrechnung, z.B. über eine Telefonrechnung erfolgen.

Gibt der Nutzer Zahlungsinformationen an der Ladestation preis, so können diese entweder zur Überprüfung an die Abrechungszentrale übermittelt werden und nach Freigabe kann dort eine Transaktionsnummer generiert werden, oder es kann unmittelbar in der Ladestation die Transaktionskennung erzeugt werden. In diesem Fall kann die Transaktionskennung von der Ladestation dem Nutzer angezeigt werden und separat oder mit Übermittlung des Energiemessewertes an die Zentrale übermittelt werden.

Auch ist es möglich, dass mittels einer Guthabenkarte eine Transaktionskennung bekannt gemacht wird. Diese Transaktionskennung ist einem bezifferten Guthaben zugeordnet. Ein Nutzer kann eine Guthabenkarte kaufen. Auf dieser ist eine Transaktionskennung verdeckt abgebildet. Das Feld mit der Transaktionskennung kann z.B. mit undurchsichtigem Kunststoff laminiert sein und vom Nutzer freigerubbelt werden.

Auch ist es möglich, dass ein Nutzer eine Transaktionskennung über einen Geldautoamten, ein Internetzahlsystem oder dergleichen bezieht, in dem er einen Geldbetrag gegen die Transaktionskennung tauscht. Die Transaktionskennung zusammen mit dem dieser zugeordneten Geldbetrag wird in der Zentrale gespeichert.

Zusammen mit einer Transaktionskennung kann dem Nutzer ein Passwort zur Verfügung gestellt werden. Dieses Passwort kann dazu genutzt werden, den Zugriff auf einen Rechnungsbeleg weiter zu schützen; in dem neben der Transaktionskennung ein Passwort eingegeben werden muss, ehe der Zugriff auf den Rechnungsbeleg gewährt wird.

Der Nutzer kann die zuvor gekaufte und erhaltene Transaktionskennung entweder an der Ladestation eingeben und somit seine Zahlungsinformation preisgeben, oder auch per Telefon oder SMS an die Zentrale übermitteln. Nach Überprüfung der eingegebenen Transaktionskennung auf Gültigkeit und ggf. nach Abruf des dieser Kennung zugeordneten Guthabens kann ein Ladevorgang freigegeben werden.

Die nachfolgende Überprüfung der Ladung kann über den Rechnungsbeleg erfolgen, auf den mittels der Transaktionskennung und ggf. eines Passworts zugegriffen werden kann.

Auch kann erst im Anschluss an die Signalisierung der Zahlungsbereitschaft eine Transaktionskennung erstellt werden.

Die Transaktionskennung kann dem Nutzer z.B. an der Ladestation angezeigt werden oder auch per SMS, e-Mail, ggf. sogar Post o.ä. zugestellt werden. Den Grad der Anonymität kann der Kunde durch eine geeignete Wahl der Entgegennahme der Transaktionskennung (zB. PrePaid Handy oder einmal e-Mail-Adresse) weitestgehend selbst bestimmen.

Nachdem der Nutzer seine Zahlungsbereitschaft signalisiert hat und ggf. Zahlungsinformationen oder eine Zahlungsinformationen enthaltene Ladeanforderung preisgegeben hat, kann die Transaktionskennung erstellt werden. Diese wird dem Nutzer mitgeteilt. Wird die Transaktionskennung in der Zentrale erstellt, wird diese der Ladestation mitgeteilt. Wird die Transaktionskennung in der Ladestation erstellt, wird diese der Zentrale mitgeteilt.

In der Ladestation wird eine Transaktionskennung einem aktuellen Ladevorgang zugeordnet. Hierdurch wird sichergestellt, dass der aktuelle Ladevorgang nachvollziehbar und nachverfolgbar wird. Andererseits gewährleistet die Transaktionskennung ein maximales Maß an Anonymität, die die Transaktionskennung ggf. frei von den Nutzer identifizierenden Merkmalen ist.

Die Transaktionskennung ist vorzugweise eine Ziffernfolge gebildet aus Zahlen und Zeichen. Bei einer ausreichend langen Ziffernfolge ist diese nur schwer nachzubilden. Wenn die Ziffernfolge z.B. eine Länge von 30 Zeichen hat und aus Ziffern, Sonderzeichen und Zahlen gebildet ist, wird diese kaum nachzubilden sein. Auch kann zusammen mit der Transaktionskennung ein Passwort erstellt werden, welches dem Nutzer zusammen mit der Transaktionskennung mitgeteilt wird.

Nach erhalt der Transaktionskennung wird ein Ladestroms in der Ladestation freigegeben.

Während des laufenden Ladevorgangs wird zumindest ein die von einem Fahrzeug von der Ladestation bezogene Energiemenge repräsentierender Messgerätezählerstand in der Ladestation erfasst. Hierbei kann z.B. auch ein zeitvariabler Tarif abgebildet werden, solange bei der Erfassung des Messgerätezählerstands entweder die Ortszeit oder ein Tarifwechsel erfasst wird und für jedes Tarifintervall ein Anfangszählerstand und ein Endzählerstand erfasst wird. Um nun die Rechnung auch als eichrechtlich zulässigen Beleg aufzubauen wird auch vorgeschlagen, dass der verwendete Energiezähler oder ein entsprechendes Zusatzgerät alle relevanten Informationen wie Messwert, Uhrzeit, Datum, Ort und Transaktionskennung mittels Signaturverfahren so verbindet, dass ein nicht mehr veränderlicher, fest der Transaktionsnummer zugeordneter Datensatz entsteht und dieser in der Rechnung auch so darzustellen oder zu übermitteln ist.

Hierzu wird vorgeschlagen, dass dem Datenpaket gebildet aus zumindest dem Messwert und der Transaktionskennung eine eindeutige Beschreibung zugeordnet wird.

Die eindeutige Beschreibung kann dergestalt sein, dass diese das Datenpaket ein-eindeutig beschreibt. Eine Veränderung an dem Datenpakt würde zu einer veränderten Beschreibung führen. Somit ist es möglich, ausgehend von einem empfangenen Datenpaket, in Kenntnis der Erstellungsvorschrift für die eindeutige Beschreibung, eine Vergleichsbeschreibung zu erstellen und mit der ebenfalls empfangenen eindeutigen Beschreibung zu vergleichen. Sind die beiden Beschreibung voneinander unterschiedlich, so ist von einer Veränderung des Datenpakets, also zumindest von einer Veränderung der Transaktionskennung oder des Messwertes auszugehen.

Es hat sich gezeigt, dass die Messung der bezogenen Energiemenge im Regelfall korrekt ist und auch durch einen eichrechtlich abgenommenen Zähler gemessen wird. Somit stellt sich nur noch die Frage, wie sichergestellt werden kann, dass die gemessene Energiemenge ausschließlich der richtigen Transaktion zugeordnet wird. Dies wird durch die Verknüpfung des Datenpakets mit der eindeutigen Bezeichnung erreicht. Insbesondere wird die eindeutige Bezeichnung durch das Messgerät, welches geeicht ist und somit besonders vertrauenswürdig ist, vorgenommen.

Die einander zugeordneten Datenpakete und eindeutigen Beschreibungen werden bevorzugt einer Abrechnungszentrale zur Verfügung gestellt. Die Abrechungszentrale kann zunächst mit der ihr bekanten Rechenvorschrift aus dem empfangenen Datenpakte eine Vergleichsbeschreibung errechnen und diese mit der mit dem Datenpaket verknüpften Beschreibung vergleichen. Bestehen Unterschiede, kann auf eine Datenmanipulation geschlossen werden. In diesem Fall kann der Messwert verworfen oder andere Maßnahmen ergriffen werden. Ist der Vergleich positiv, so kann dem Datenpaket die Transaktionskennung entnommen werden und die Energiemenge anhand der erhaltenen Zahlungsinformationen abgerechnet werden, in dem z.B. eine Mobilfunkrechnung belastet wird, eine kostenpflichtige SMS dem Nutzer zugesendet wird, eine Kreditkarte belastet wird und dergleichen. Gleichzeitig kann für die Transaktion ein Rechnungsbeleg erstellt werden.

Das Datenpaket zusammen mit der Beschreibung kann abgespeichert werden. Hierdurch ist ein nachträglicher Nachweis möglich, dass einer bestimmten Transaktion ein Ladevorgang zugeordnet ist. Der Nutzer kann den Rechnungsbeleg anfordern, in dem er die nur ihm bekannte Transaktionskennung und ggf. das Passwort nutzt. Hierbei kann der Nutzer anonym bleiben. Insbesondere ist ein internetbasierter Zugriff auf einen Rechnungsbeleg unter Verwendung zumindest der Transaktionskennung vorteilhaft.

Während oder spätestens im Anschluss an die Ladung erstellt der Energielieferant den Rechnungsbeleg zu dem Ladevorgang unter der Transaktionskennung für einen geeigneten Zeitraum z.B. 30 oder 90 Tage für den Nutzer bereit. Auf z.B. einem Internetportal steht dieser für den Nutzer zum Download bereit. Auch ist ein Faxabruf oder ein sonstiger Abruf des Rechnungsbelegs unter Verwendung der Transaktionskennung möglich.

Es obliegt nun dem Nutzer, die Rechnung zu prüfen und ggf. Widerspruch gegen die Rechnung einzulegen. Dabei kann dann der Nutzer seine Anonymität aufgeben und belegen, dass er derjenige ist, dem die Transaktionskennung mitgeteilt wurde.

Um eine eindeutige Zuordnung zwischen einem Ladevorgang und einer Transaktionskennung zu gewährleisten, muss die Transaktionskennung eindeutig und einmalig sein. Außerdem sollte, um Fremdzugriffe auf die Rechnungsbelege zu vermeiden, die Transaktionskennung ausreichen lang sein.

Darüber hinaus wird vorgeschlagen dem Kunden eine Prüfsoftware zur Verfügung zu stellen, mit deren Hilfe er die Korrektheit des erhaltenen Datensatzes überprüfen kann. Dabei sollte die Software nicht nur die Signaturen sondern auch die inhaltliche Fehlerfreiheit des Datensatzes verifizieren.

Gemäß einem vorteilhaften Ausführungsbeispiel enthält die Transaktionskennung geeignete Merkmale, an denen Energielieferenat und der Nutzer sicher erkennen können, aufgrund welcher Ladeanforderung die erstellt wurde. Im Prepaid Fall könnte dabei aus Vereinfachungsgründen auch die Karten-/Kundennummer zumindest teilwesie als Transaktionskennung gewählt werden. Insbesondere dann, wenn bereits durch die Prepaid Karte eine ausreichende Anonymität gewährleistet ist.

Auch wird vorgeschlagen, dass in der Ladestation eine Zahlungsinformation erstellt wird. Die Zahlungsinformation kann entweder die Information über eine Zahlungsbereitschaft sein oder bereits eine vom Nutzer zuvor gekaufte Transaktionskennung enthalten. Die erstellte Zahlungsinformation kann an die Abrechnungszentrale übermittelt wird. Im Anschluss an die Übermittlung der Zahlungsinformation kann, sofern noch nicht vorhanden, die Transaktionskennung von der Abrechnungszentrale erstellt und in der Ladestation empfangen werden.

Hierbei ist beispielsweise die Zahlung an einem Geldautomaten oder Münzautomaten oder einem Kartenterminal an der Ladestation zu denken. Sobald ein Nutzer einen bestimmten Betrag gezahlt hat, entweder bar oder durch Abbuchung von seinem Kartenkonto, kann die Zahlungsinformation zusammen mit einer ID der Ladestation, aber vorzugsweise anonym, an die Abrechnungszentrale übermittelt werden. Dort wird die Transaktionskennung erstellt. Auch kann die Transaktionskennung zunächst in der Ladestation erstellt werden und mit der Zahlungsinformation an die Zentrale übermittelt werden. Mit der Transaktionskennung werden in der Ladestation die Messwerte verknüpft und der Kunde kann diese anhand eines Rechnungsbelegs, der mit der Transaktionskennung verknüpft wird, einsehen und überprüfen.

Auch wird vorgeschlagen, dass die Transaktionskennung zumindest teilweise aus Nutzerinformationen gebildet ist. Diese können z.B. auch für den Energielieferanten anonyme Daten, wie z.B. eine Kartennummer einer Prepaid Karte sein. In der Transaktionskennung kann z.B. auch zumindst teilweise aus eine von einem Mobiltelefon oder einer Mobilfunkkarte des Nutzers ermittelte Nutzerinformationen enthalten sein.

Gemäß einem Ausführungsbeispiel wird vorgeschlagen, dass die eindeutige Beschreibung eine Signatur zur dauerhaften, eindeutigen Protokollierung eines mit einer Transaktionskennung verknüpften Messgerätezählerstands ist.

Um es dem Nutzer zu ermöglichen, zumindest die Abrechungsdaten und/oder die bezogene Energiemenge zu überprüfen, wird das elektronische Signieren des Datenpakets zusammen mit der Beschreibung und das anschließende Übermitteln von der Ladestation an die Abrechnungszentrale vorgeschlagen.

Im Nachfolgenden werden die Begriffe "Signatur", "signieren" etc im Sinne einer elektronischen, datentechnischen Signatur verwendet. Auch kann durch das elektronische Signieren des Datenpakets sichergestellt werden, dass dieses nicht mehr nachträglich manipuliert wird.

Wie bereits beschrieben wurde, wird auch vorgeschlagen, dass die eindeutige Beschreibung derart mit dem Inhalt des Datenpakets verknüpft ist, dass eine Veränderung des Inhalts des Datenpakets eine veränderte Beschreibung bewirkt. Es kann somit eine eins-zu-eins Beziehung zwischen dem Datenpaket und der Beschreibung erstellt werden. Verändert sich auch nur ein Bit im Datenpaket, würde dies zu einer Veränderung der Beschreibung führen. In der Ladestation, vorzugsweise dem Messgerät der Ladestation, ist eine Rechenvorschrift hinterlegt, die es ermöglicht, aus dem Datenpaket eine eindeutige Beschreibung zu erstellen. Dies kann unter Verwendung von Schlüsseln, wie nachfolgend auch beschrieben wird, erfolgen. Ist die Rechenvorschrift und ggf. der Schlüssel im Empfänger bekannt, so kann dieser aus dem empfangenen Datenpaket eine Vergleichsbeschreibung errechnen und mit der dem Datenpaket zugeordneten Beschreibung vergleichen und somit Manipulationen entdecken. Auch ist der eindeutige Nachweis einer Nutzung einer Ladestation durch einen Kunden mit dem beschriebenen Verfahren möglich.

Um die eindeutige Beschreibung zu erstellen, wird auch vorgeschlagen, dass zumindest eines Teils eines Messgeräteschlüssels erfasst wird. Dieser kann ein privater Schlüssel sein, der es erlaubt die eindeutige Bezeichnung so zu erstellen, dass diese manipulationssicher ist.

Auch wird vorgeschlagen, die Signatur des Datenpakets mit Hilfe des Messgeräteschlüssels erstellt wird. Die Signatur kann über das gesamte Datenpaket oder einen Hashwert des Datenpakets errechnet werden. Auch ist es möglich, zunächst das Datenpaket aus Messgerätezählerstand und Transaktionskennung zu signieren, das Datenpaket und die Signatur in einem neuen Datenpaket zusammen zu fassen und im Anschluss weitere Daten, wie sie nachfolgend aufgezählt werden, dem neuen Datenpaket hinzuzufügen. Dieses neue Datenpaket mit den weitern Daten kann dann erneut signiert werden.

Gemäß einem Ausführungsbeispiel wird vorgeschlagen, dass das Datenpaket neben der Transaktionskennung und dem Messgerätezählerstand zumindest weitere Daten aus einer Messgeräteidentifikation, einem Messgerätestatus, Zeitinformationen, Datumsinformationen, einem öffentlichen Messgeräteschlüssel, einem Zeit-Index, einer Nutzerinformation und/oder einer Zahlungsinformation enthält. Diese Aufzählung ist nicht abschließend und kann um weiter relevanten Daten ergänzt werden.

Eine besonders einfache Eingabe der Transaktionskennung ist dann möglich, wenn die Transaktionskennung eine ASCII Zeichenfolge ist.

Für die eindeutige Zuordnung der Messdaten zu einem Nutzer sollte diese möglichst unmittelbar in der Messstelle erfolgen, um Manipulation weitestgehend auszuschließen. Daher wird vorgeschlagen, dass die Schritte nach Anspruch 1 ladestationsseitig durchgeführt werden.

Auch wird vorgeschlagen, dass die Zahlungsinformationen und/oder die Ladeanforderung über an der Ladestation angeordnete Erfassungsmittel erfasst werden. Die Erfassungsmittel können in, an oder außerhalb der Ladestation angeordnet sein.

Die Ladestation erfasst neben der Energiemenge und der Transaktionskennung zumindest auch eine Identifikation des Messgeräts. Dies kann eine Gerätenummer sein. Die Identifikation des Messgeräts kann auch die zusätzliche Identifikation der Ladestation sein. Mit Hilfe zumindest dieser Werte kann das Datenpaket erweitert werden.

Mit Hilfe eines eindeutigen, aus dem Datenpaket und einem dem Messgerät (Zähler) oder der Ladestation zugeordneten Schlüssels erstellten, vorzugsweise binären Wertes, kann eine Signatur errechnet wird. Aus dem Datenpaket kann ein Referenzwert, beispielsweise ein Hash-Code, errechnet werden. Dieser Referenzwert kann auch zur Berechnung der Signatur verwendet werden. Diese Signatur kann beispielsweise mit Hilfe des Hash-Codes und eines dem Messgerät (Zähler) oder der Ladestation zugeordneten Schlüssels errechnet werden. Auch kann eine Signatur unmittelbar aus dem Datenpaket und dem dem Messgerät (Zähler) oder der Ladestation zugeordneten Schlüssel errechnet werden.

Signieren kann ein Erstellen eines Kryptogrammes als Signatur mit Hilfe eines vorzugsweise binären Schlüssels sein, wobei mit Hilfe des Schlüssels und des zu signierenden Datenpaketes bzw. des hieraus erstellen Referenzwertes ein vorzugsweise binäres Kryptogramm erstellt wird. Mittels eines solchen Kryptogrammes ist eine Überprüfung möglich, ob das Datenpaket tatsächlich von der Ladestation erstellt wurde.

Beispielsweise bei einem Ladevorgang ist es möglich, dass der Nutzer zu Beginn eines Ladevorgangs die Messgeräteidentifikation, die beispielsweise außen am Gehäuse der Ladestation angeordnet ist, notiert und zusätzlich die Uhrzeit des Beginns des Ladevorgangs notiert. Zum Ende der Ladevorgang kann der Nutzer erneut die Urzeit notieren.

Wenn diese Zeitinformationen zusammen mit dem Messgerätezählerstand Teil des jeweiligen Datenpakets werden, so kann eine Signatur dieses Datenpakets durch den Nutzer überprüft werden, wenn der Nutzer zusätzlich die Transaktionskennung und den öffentlichen Messgeräteschlüssel kennt.

Zum Beispiel ist es möglich, dass der Nutzer zu Beginn und zum Ende eines jeden Ladevorgangs die Messgeräteidentifikation und die jeweilige Uhrzeit notiert.

Die Ladestation erstellt ein Datenpaket, welches eine Transaktionskennung in dem Datenpaket und zusätzlich beispielsweise die Uhrzeit als auch die Messgeräteidentifikation enthält. Zusätzlich kann das Datenpaket den Messgerätzählerstand und den Messgerätestatus enthalten.

Der Messgerätestatus kann eine Information über die technische Funktionalität der Ladestation enthalten, z.B. ein binärer Wert, der angibt, ob die Ladestation fehlerfrei arbeitet.

Mit Hilfe des privaten Messgeräteschlüssels kann eine Signatur aus diesem Datenpaket erstellt werden. Die Signatur zusammen mit dem Datenpaket kann von der Ladestation an die Abrechnungsstation übermittelt werden.

Durch die Signatur des Datenpakets ist sichergestellt, dass die in dem Datenpaket enthaltenen Messwerte und die Transaktionskennung untrennbar miteinander verbunden sind. Wird einer der beiden Werte verändert, so ergäbe sich eine andere Signatur. Wenn der Nutzer z.B. auch noch die Zeitinformation selber erfassen kann, kann er auch eine Manipulation des Messwertes, wenn dieser die Zeitinformation beinhaltet, feststellen.

Nach Abschluss eines Ladevorgangs wird vom Stromnetzbetreiber/Energielieferanten ein Rechnungsbeleg über die bezogene Energiemenge erstellt. In diesem Rechnungsbeleg kann beispielsweise der Ladevorgang aufgeschlüsselt nach Start und Ende des Ladevorgangs aufgelistet sein.

Zusätzlich kann jeder Rechnungsbeleg die Messgeräteidentifikation, beispielsweise eine Ladepunkt-ID, als auch eine Zählernummer zugeordnet sein. Zusätzlich können die Start- und Endzählerstände sowie die Start- und Endzeiten (Zeit, Datum) einem Rechnungsbeleg zugeordnet sein. Mit diesen Informationen kann dem Kunden in dem Rechnungsbeleg die bezogene Energiemenge für einen einer Transaktionskennung zugeordneten Ladevorgang ablesen.

Darüber hinaus kann der Nutzer zusammen mit jedem Rechnungsbeleg eine Information über den Messgerätestatus als auch die Signatur, die für das entsprechende Datenpaket erstellt wurde, erhalten. Für jeden Rechnungsbeleg können z.B. zwei Signaturen erstellt werden. Eine erste Signatur für das Datenpaket, das zu Beginn des Ladevorgangs erstellt wurde und eine zweite Signatur für das Datenpaket, das zum Ende des Ladevorgangs erstellt wurde.

Durch die Verwendung der Transaktionskennung im Datenpaket kann der Nutzer auch überprüfen, ob die in Rechnung gestellte Energiemenge tatsächlich der Transaktion bzw. dem Ladevorgang zugeordnet ist, die er ausgelöst hat.

Abschließend kann der Nutzer den öffentlichen Messgeräteschlüssel mitgeteilt bekommen.

Da der Kunde selbstständig sowohl Transaktionskennung, die Messgeräteidentifikation als auch die Uhrzeit des jeweiligen Ladevorgangs notiert hat, kann er zusammen mit den zusätzlichen Informationen aus dem Rechnungsbeleg, beispielsweise Ladepunktidentifikation, Zählernummer, Zählerstand und dem öffentlichen Schlüssel, die ihm mitgeteilte Signatur für jedes Datenpaket einzeln überprüfen. Hierzu kann er beispielsweise mittels der ihm mitgeteilten Signatur und des Mittels ihm mitgeteilten öffentlichen Schlüssels den Referenzwert errechnen. Ein Vergleichsreferenzwert kann der Kunde beispielsweise mittels der von ihm notierten Information und der zusätzlichen Information aus dem Rechnungsbeleg errechnen und überprüfen, ob die Daten identisch sind. Somit hat der Kunde die Möglichkeit, die Richtigkeit des Rechnungsbelegs zu überprüfen.

Es kann beispielsweise mit einem empfängerseitig bekannten, zu dem Signaturschlüssel passenden Schlüssel der Referenzwert oder das zu signierende Datenpaket aus der Signatur zurück errechnet werden. Dazu kann beispielsweise empfängerseitig ein Vergleichs-Referenzwert ausgehend von dem Datenpaket errechnet werden. Stimmen errechneter Referenzwert und Vergleichs-Referenzwert überein, kann von einer Datenintegrität ausgegangen werden.

Beispielsweise kann aus Nutzdaten (Datenpaket) ein Referenzwert berechnet werden. Aus diesem Referenzwert kann mit einem privaten Schlüssel eine Signatur errechnet werden. Die Signatur kann zusammen mit den Nutzdaten in einem Datencontainer, als zwei getrennte Dateien oder eingebettet in die Nutzdaten, an einen Empfänger verschickt werden. Der Empfänger kann mit einem zum privaten Schlüssel passendem öffentlichen Schlüssel aus der Signatur den Referenzwert errechnen. Aus den ebenfalls empfangenen Nutzdaten kann empfängerseitig ebenfalls ein Vergleichs-Referenzwert berechnet werden. Stimmen Referenzwert und Vergleichs-Referenzwert überein, kann die Integrität, Authentifizierung, Authentizität der Nutzdaten sichergestellt werden.

Vorteilhafterweise wird dem Kunden zusammen mit dem Rechnungsbeleg für jedes Datenpaket eine gesonderte Signatur mitgeteilt. Für jeden Rechnungsbeleg, der sich aus zwei Messungen zusammensetzt, nämlich dem Beginn und dem Ende eines Ladevorgangs stehen zwei Datensätze zur Verfügung, beziehungsweise stehen bei einem Tarifwechsel (mit drei oder vier Messungen) drei oder vier Datensätze zur Verfügung, nämlich Start und Ende des Ladevorgangs sowie ein weitere Datensatz für den Tarifwechsel oder zwei Datensätze, einer für das Ende des ersten Tarifs und einer für das Ende des zweiten Tarif, bzw. den jeweiligen Zeitpunkten innerhalb eines Tarifs, denen jeweils eine Signatur zugeordnet ist. Der erste Datensatz bestimmt den Beginn des Ladevorgangs und enthält zusätzlich beispielsweise Messgeräteidentifikationen (Ladepunkt-ID, Zählernummer), den Zählerstand und das Statuswort. Für das Ende des Ladevorgangs existiert ein zweiter Datensatz, der den Zeitpunkt des Endes des Ladevorgangs enthält. Das gleiche gilt für die Datensätze bei einem Tarifwechsel, denen auch eine Zeitinformation, eine Messgeräteidentifikation und ein Zählerstand zugeordnet sind.

Für jeden Datensatz wird in der Ladestation eine Signatur errechnet, welche dem Nutzer im Rechnungsbeleg im Klartext zur Verfügung gestellt wird. Die Richtigkeit der Signatur kann der Nutzer dadurch überprüfen, dass er mit Hilfe der von ihm mitgeteilten Transaktionskennung und ggf. notierten Zähleridentifikation und Zeitinformation zusammen mit den ihm mitgeteilten Informationen über Zählerstand und Statuswort als auch dem öffentlichen Schlüssel eine Vergleichssignatur errechnen kann und überprüfen kann, ob die mitgeteilte Signatur und die errechnete Vergleichssignatur identisch sind. Die grundsätzliche Verwendbarkeit eines Datensatzes ergibt sich für den Kunden daraus, dass er die Transaktionskennung, die Identifikationsnummer des Ladepunktes (Zählers) sowie Zeitinformationen (Datum und/oder Uhrzeit) mit seinen Aufzeichnungen vergleicht.

Dadurch, dass die mitgeteilte Signatur ein-eindeutig dem Datenpaket zugeordnet werden kann, könnte der Nutzer eine Manipulation des Wertes des Messgerätezählerstands feststellen. Dann wäre nämlich die ihm mitgeteilte Signatur nicht mehr identisch mit der von ihm berechneten Signatur. Ein veränderter Zählerstand würde mit identischen Informationen über Transaktionskennung, Zeitpunkt der Ladung und/oder Messgeräteidentifikation zu einer anderen Signatur führen. Der Kunde notiert aber vorzugsweise Transaktionskennung, den Zeitpunkt des Ladevorgangs als auch die Messgeräteidentifikation selber, so dass er eine Manipulation im Bereich des Messgerätezählerstands erkennen kann.

Unter einer elektronischen Signatur können auch mit elektronischen Informationen verknüpfte Daten, mit denen man den Unterzeichner bzw. Signaturersteller identifizieren und die Integrität der signierten elektronischen Informationen prüfen kann, verstanden werden. In der Regel handelt es sich bei den elektronischen Informationen um elektronische Dokumente. Die elektronische Signatur erfüllt somit technisch gesehen den gleichen Zweck wie eine eigenhändige Unterschrift auf Papierdokumenten. Eine elektronische Signatur kann unter anderem auch eine digitale Signatur umfassen. Die digitale Signatur kann die rein datentechnische, kryptographische Signatur bezeichnen, bei der kryptographische, mathematische Methoden angewandt werden. "Elektronische Signaturen" können Daten in elektronischer Form, die anderen elektronischen Daten beigefügt oder logisch mit ihnen verknüpft sind und die der Authentifizierung dienen, sein.

Ändern sich bei der Übertragung Werte innerhalb des Datenpakets, so kann empfängerseitig, bspw. in der Abrechnungszentrale, festgestellt werden, dass die mit dem Datenpaket übertragene Signatur nicht zu dem empfangenen Datenpaket passt und eine Veränderung des Datenpakets stattgefunden haben muss. Der Vergleich der empfangenen Signatur mit einer errechneten Vergleichs-Signatur oder der Vergleich eines Referenzwertes mit einem Vergleichs-Referenzwertes ergibt bei veränderten Daten einen Unterschied zwischen diesen beiden Werten.

Gemäß einem vorteilhaften Ausführungsbeispiel wird vorgeschlagen, dass das Datenpaket und die eindeutige Beschreibung zumindest zum Beginn und zum Ende eines Ladevorgangs und/oder zyklisch während eines Ladevorgangs erstellt und an die Abrechnungszentrale übermittelt werden. In der Abrechnungszentrale kann somit aus den beiden Datenpaketen ein Rechnungsbeleg erstellt werden, in dem die Veränderung des Messgerätezählerstands ausgewertet wird und anhand dieser Veränderung eine Energiemenge berechnet wird. Zusammen mit Tarifinformationen kann mit der errechneten Energiemenge ein Rechnungsbetrag bestimmt werden. Dadurch, dass für jedes Datenpaket eine Signatur erstellt wurde und der Nutzer zum Beginn und zum Ende eines jedes Ladevorgangs selbsttätig Zeitinformationen notiert hat, die Teile des Datenpakets und somit relevant für die Signatur sind, kann der Kunde anhand der Signatur überprüfen, ob die dem Rechnungsbeleg zugrundeliegenden Informationen korrekt sind oder nicht.

Auch wird vorgeschlagen, dass das Datenpaket und die eindeutige Beschreibung zu einem Zeitpunkt eines Tarifwechsels erstellt wird, wobei zu einem Zeitpunkt eines Tarifwechsels ein erstes Datenpaket und die jeweilige Signatur für ein Ende eines ersten Tarifs erstellt wird und ein zweites Datenpaket und die jeweilige Signatur für einen Beginn eines zweiten Tarifs, oder nur ein Datenpaket den Tarifwechsel repräsentierend, erstellt wird. Somit wird sichergestellt, dass bei einem Tarifwechsel die jeweils zu einem bestimmten Tarif bezogene Energiemenge festgestellt werden kann. Wechselt ein Tarif während eines Ladevorgangs, so wird der Zählerstand des Messgerätes im Moment des Tarifwechsels erfasst. Mit Hilfe dieses Zählerstandes und der Zeitinformation unmittelbar vor dem Tarifwechsel wird ein erstes Datenpaket erstellt und zusammen mit der Zeitinformation unmittelbar nach einem Tarifwechsel ein zweites Datenpaket. Jedes der Datenpakete wird signiert und an die Abrechnungsstation übermittelt, so dass eine Überprüfung möglich ist. Alternativ kann auch ein Datenpaket für den Wechselzeitpunkt erstellt werden.

Gemäß einem vorteilhaften Ausführungsbeispiel wird vorgeschlagen, dass die Ladestation und/oder die Abrechnungsstation aus dem Messgerätezählerstand zum Beginn eines Ladevorgangs und dem Messgerätezählerstand zum Ende eines Ladevorgangs oder bei einem Tarifwechsel eine bezogene Energiemenge berechnet. Mit Hilfe des Unterschieds zwischen den jeweiligen Messgerätezählerständen kann eine Energiemenge berechnet werden, die für die Erstellung eines Rechnungsbelegs verwendet werden kann.

Wie bereits zuvor erläutert, können von der Abrechnungsstation Abrechnungsdaten zu der bezogenen Energiemenge bereitgestellt werden. Diese Abrechnungsdaten können im Rahmen eines Rechnungsbelegs dem Nutzer mitgeteilt werden. Für jeden Ladevorgang kann ein Start- und Endzeitpunkt ausgeben werden. Zusätzlich hierzu können Informationen zu Messgeräteidentifikationen, beispielsweise eine Ladepunkt-ID, als auch eine Zählernummer ausgegeben werden. Auch kann die Adresse der jeweiligen Ladestation ausgegeben werden. Zusätzlich kann für jeden Zeitpunkt ein Zählerstand ausgegeben werden und zusammen mit einem Tarif auf dem Rechnungsbeleg angegeben werden. Schließlich kann für jeden Ladevorgang die bezogene Energiemenge ausgegeben werden.

Auf einem Rechnungsbeleg können auch für jeden Ladevorgang Zeitinformationen ausgeben. Außerdem kann die Zählernummer oder eine sonstige Messgeräteidentifikation zusammen mit dem Zählerstand und/oder einem Messgerätestatus ausgegeben werden. Diese Daten können beispielsweise Bestandteil des Datenpakets gewesen sein. In der gleichen Zeile kann dann eine Signatur ausgegeben werden, die sich aus den angegebenen Daten und dem Messgeräteschlüssel ergeben hat.

Der öffentliche Schlüssel kann zusammen mit den Informationen, die für jedes Datenpaket dem Benutzer mitgeteilt worden sind, überprüft werden, ob die Signatur korrekt ist. Da der Nutzer sowohl den Zeitpunkt als auch die Zählernummer notiert hat und ihm die Transaktionskennung bekannt ist, kann er mit den von ihm selbst notierten Informationen die Signatur auf Authentizität und Integrität überprüfen.

Auch ist es möglich, dass die oben genannten Informationen abrufbar, insbesondere über ein Weitverkehrsnetz, insbesondere über das Internet bereitgehalten werden.

Gemäß einem vorteilhaften Ausführungsbeispiel wird vorgeschlagen, dass die Abrechnungsdaten zugriffsgeschützt bereitgehalten werden. Insbesondere können die Daten durch die Transaktionskennung zugriffsgeschützt bereitgehalten werden. Somit wird sichergestellt, dass nur Berechtigte Zugriff auf den Rechnungsbeleg haben. Der Zugriff auf die öffentlichen Schlüssel der jeweiligen Messgeräte kann jedoch so geschützt sein, dass alle Kunden eines Energieversorgers hierauf einen gemeinsamen Zugriff haben. Alternativ kann hier sogar gänzlich auf einen Zugriffsschutz verzichtet werden.

Um sicherzustellen, dass seitens des Energieanbieters keine Manipulation der Rechnungsdaten erfolgen kann, was beispielsweise dadurch möglich wäre, dass der öffentliche Schlüssel manipuliert wird, wird vorgeschlagen, dass die öffentlichen Messgeräteschlüssel von Messgeräten der Ladestationen durch einen von der Abrechnungsstation logisch und/oder räumlich getrennten Computer bereitgehalten werden. Insbesondere können die öffentlichen Schlüssel bei einer Eichsstelle oder Prüfstelle vorgehalten werden, so dass eine Manipulation durch den Energieanbieter unmöglich wird.

Um den Nutzern die Überprüfung der Rechnungsdaten zu erleichtern, wird vorgeschlagen, dass ein Computerprogramm zur Errechnung und/oder Überprüfen der Signatur für den jeweils zugeordneten Messgerätezählerstand bereitgestellt wird. Dieses Programm kann beispielsweise aus den Online verfügbaren Rechnungsdaten oder auch aus den von Nutzern eingegebenen Rechnungsdaten die Signatur errechnen. Der Nutzer kann beispielsweise die Transaktionskennung, den von ihm notierten Zeitpunkt sowie die von ihm notierte Zählernummer von Hand eingeben. Zusammen mit diesen Informationen kann das Programm aus den Rechnungsinformationen, beispielsweise dem Zählerstand und dem Statuswort, unter Verwendung des öffentlichen Schlüssels die Signatur errechnen. Diese Signatur kann dann durch das Programm automatisch mit der Signatur verglichen werden, die in den Rechnungsdaten enthalten war. Der Nutzer kann diese Überprüfung jedoch auch selbst durchführen, da die von dem Programm errechnete Vergleichssignatur im Klartext ausgegeben wird und die/den Rechnungsdaten zugrunde liegende Signatur ebenfalls im Klartext ausgegeben wurde. Dieses Programm kann von einem Computer zur Verfügung gestellt werden, der logisch und/oder räumlich von der Abrechnungsstation getrennt ist. Insbesondere kann eine Eichstelle neben den öffentlichen Schlüsseln dieses Programm zur Verfügung stellen.

Gemäß einem Ausführungsbeispiel kann im Messgerät oder der Ladestation ein Paar aus öffentlichem Messgeräteschlüssel (PuM) und privatem Messgeräteschlüssel (PiM) gespeichert sein. Mit Hilfe des privaten Messgeräteschlüssels (PiM) kann eine Signatur (SD) des Datenpaketes erstellt werden. Hierzu kann beispielsweise aus einem dem Datenpaket zugeordneten Referenzwert mit Hilfe des privaten Messgeräteschlüssels (PiM) ein Kryptogramm errechnet werden. Dieser Referenzwert kann ein Hash-Code sein.

Empfängerseitig, z.B. in einer Abrechnungszentrale oder durch den Nutzer kann die Authentizität und Datenintegrität des empfangenen Datenpaketes dadurch überprüft werden, dass das empfangene Kryptogramm mit Hilfe des empfängerseitig bekannten öffentlichen Messgeräteschlüssels entschlüsselt wird und der Referenzwert somit berechnet wird. Ein Vergleich mit einem empfängerseitig aus dem Datenpaket errechneten Referenzwert ermöglicht die Überprüfung der Datenintegrität. Beispielsweise ist es möglich, dass der öffentliche Messegeräteschlüssel (PuM) in einer Abrechnungszentrale bekannt ist. Auch kann der öffentliche Messgeräteschlüssel (PuM) in dem Datenpaket enthalten sein.

Ein Hash-Code kann mittels eines eindeutigen Rechenverfahrens als ein statistisch eindeutiger Referenzwert errechnet werden. Ein Hash-Code kann ein aus einer endlichen Vielzahl von Werten ermittelter Wert sein. Aufgrund der Vielzahl der möglichen Hash-Codes kommt es bei einer Veränderung des Datensatzes zu einem geänderten Hash-Code. Dass zwei unterschiedliche Datensätze einen gleichen Hash-Code erzeugen ist, abhängig von der Anzahl und Art der Koeffizienten zur Berechnung des Hash-Codes, äußerst unwahrscheinlich. Für die diese Wahrscheinlichkeit ist das Verfahren zur Berechnung des Hash-Wertes wesentlich. Beispiele für Hash-Code Berechnungsmethoden können MD2, MD4, MD5, SHA, RIPEMD-160, Tiger, HAVAL, Whirlpool, LM-Hash oder NTLM. Andere Verfahren, insbesondere kryptographische Verfahren sind ebenso geeignet.

Eine kryptologische Hashfunktion sollte zumindest eine Einwegfunktion sein. Sogenannte Einweg-Hashfunktionen (One-Way-Hash Functions, OWHFs) erfüllen die Bedingung, eine Einwegfunktion zu sein, d. h. zu einem gegebenen Ausgabewert h(x) = y ist es praktisch unmöglich, einen Eingabewert x zu finden (engl. preimage resistance). Außerdem ist eine Hashfunktion besser für die Kryptographie geeignet, wenn möglichst keine Kollisionen auftreten. Das heißt, dass für zwei verschiedene Werte x und x' der Hashwert (Hash-Code) möglichst auch verschieden sein sollte: h(x) ungleich h(x'). Ist dies immer der Fall, so kann von einer kollisionsresistenten Hashfunktion (Collision Resistant Hash Function, CRHF) gesprochen werden.

Aus der Signatur kann mit Hilfe des öffentlichen Messgeräteschlüssels (PuM) ein Referenzwert errechnet werden, der mit einem aus dem Datenpaket errechneten Vergleich-Referenzwert verglichen werden kann. Hierdurch kann überprüft werden, ob die in dem Datenpaket enthaltenen Messdaten auf der Kommunikationsstrecke von Ladestation zur Abrechnungszentrale manipuliert wurden.

Gemäß einem vorteilhaften Ausführungsbeispiel wird auch vorgeschlagen, dass eine Signatur mittels eines SHA-256 Verfahrens ermittelt wird. Hierbei kann beispielsweise eine Variante FIPS 180-2 verwendet werden.

Insbesondere wird vorgeschlagen, dass eine Signatur mit Hilfe eines Elliptic-Curve Kryptografieverfahrens ermittelt wird. Hierbei ist es beispielsweise möglich, dass ein ECC-Verfahren mit 192 Bit verwendet wird.

Gemäß einem vorteilhaften Ausführungsbeispiel wird auch vorgeschlagen, dass das Datenpaket mittels eines asymmetrischen Verfahrens signiert wird. Bei diesem Verfahren wird, wie bereits zuvor erläutert, ein privater Schlüssel für eine Signatur verwendet und ein öffentlicher Schlüssel, der empfängerseitig bekannt ist, für die Entschlüsselung der Signatur verwendet.

Um eine Zuordnung eines Messwertes zu einem Mess-Zeitpunkt zu ermöglichen, wird vorgeschlagen, dass das Datenpaket einen Zeit-Index enthält. Ein Zeit-Index kann beispielsweise ein Sekundenindex sein, der über die gesamte Lebensdauer des Ladegeräts im mathematischen Sinne streng monoton wachsend ist und eine natürliche Zahl darstellt. Mit Hilfe dieses Sekundenindexes ist es möglich, eine ein-eindeutige Zuordnung des Mess-Zeitpunktes zu einem Messwert vorzunehmen. Auch kann ein Betriebssekundenzähler verwendet werden, der eine monoton wachsende natürliche Zahl sein kann, deren Ziel die eindeutige Zuordnung des Zeitpunktes eines Ereignisses zu der als Bezugssystem angenommenen gesetzlichen Zeit ist.

Wenn ein Nutzer Laden möchte, kann er z.B. eine SMS an eine Abrechungszentrale mit der Nummer der Ladestation, an der er Laden möchte schicken, oder z.B. in einer mobilen Applikation die Nummer der Ladestation angeben. Dadurch wird eine Ladeanforderung in der Abrechungszentrale erstellt. Wenn ausreichende Zahlungsinformationen vorhanden sind, die auch in der Ladeanforderung enthalten sein können, kann im Anschluss an die empfangene Ladeanforderung die Transaktionskennung erstellt werden und an die Ladestation übermittelt werden.

Auch wird vorgeschlagen, dass zunächst eine Ladeanforderung in einer Abrechnungszentrale empfangen wird. In der Ladeanforderung könen die Quelle der Ladeanforderung beschreibende Quellinformationen enthalten sein. Diese können z.B. eine Mobilfunknummer, eine Telefonnummer, eine E-Mail Adresse, eine Kreditkartennummer oder dergleichen sein. Auch kann eine Quellinformation die bereits vom Nutzer gekaufte Transaktionskennung sein. Die Transaktionskennung wird so erstellt, dass diese zumindest teilweise die Quellinformationen enthält.

Auch wird vorgeschlagen, dass die Transaktionskennung über ein Call-Center, eine Kurznachricht, eine E-Mail, eine Internetseite oder eine an der Ladestation angeordnete Ausgabeeinrichtung dem Nutzer mitgeteilt wird. Mit der so mitgeteilten Transaktionskennung kann ein Nutzer einen Rechnungsbeleg anfordern und die darin enthaltenen Daten auf ihre Richtigkeit überprüfen.

Auch wird vorgeschlagen, dass die Transaktionskennung zumindest teilweise aus einer temporären Kundenkennung gebildet ist. Eine temporäre Kundenkennung kann dergestalt sein, dass diese wie eine Kundenummer aufgebaut ist, jedoch nur zeitweise existiert und keinem tatsächlichen Kunden zugeordnet ist. Vielmehr ermöglicht dies, dass sowohl Kunden unter Verwendung ihrer Kundennummer als auch anonyme Nutzer unter Verwendung der Transaktionskennung über den selben Zugriffsweg, z.B. ein Internetportal, Zugriff auf Rechnungsbelege haben.
Die zuvor genannten Verfahren können auch als Computerprogramm oder als auf einem Speichermedium gespeichertes Computerprogramm realisiert werden. Hierbei kann ladestationsseitig, und/oder abrechungszentralseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1a: einen schematischen Aufbau eines Systems zum Laden eines Elektrofahrzeugs;
- Fig. 1b: einen schematischen Aufbau eines Messgerätes mit Erfassungsmitteln zum Erfassen einer Zahlungsinformation;
- Fig. 2a-b: beispielhafte Datenpakete und Signaturen;
- Fig. 3: eine Ablaufdiagramm eines beispielhaften Verfahrens.

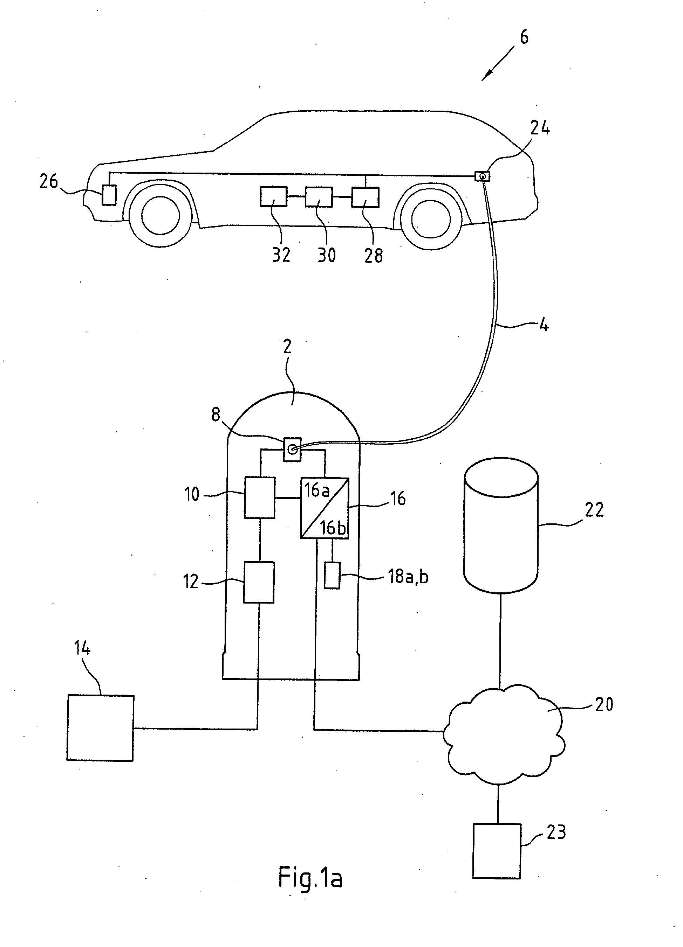

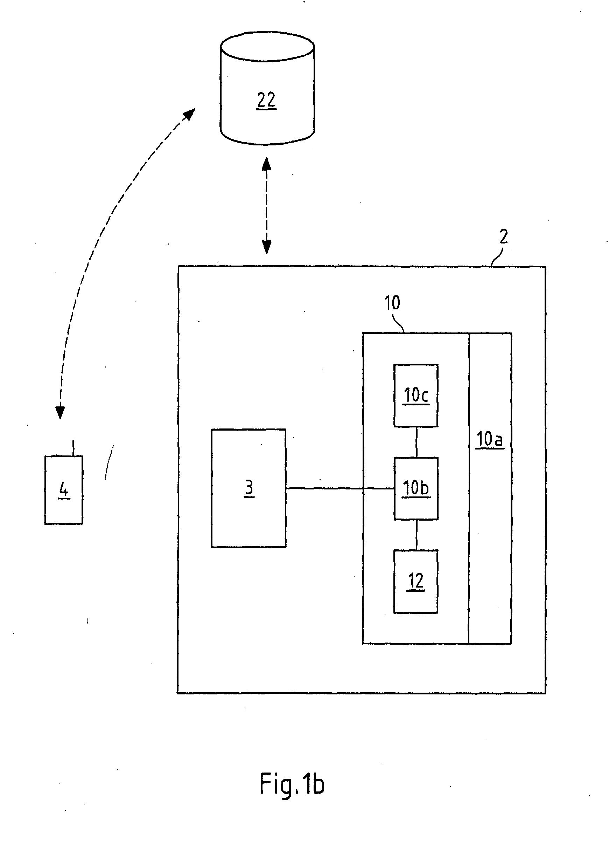

Fig. 1 zeigt eine Ladestation 2 welche über ein Verbindungskabel 4 mit einem Fahrzeug 6 elektrisch verbunden ist. In der Ladestation 2 ist eine Anschlussdose 8 zum Anschluss des Verbindungskabels 4 vorgesehen. Über das Verbindungskabel 4 werden zum Einen Energie übertragen und zum Anderen Daten zwischen Fahrzeug 6 und Ladestation 2 ausgetauscht.

Die Anschlussdose 8 ist elektrisch mit einem Messgerät 10 verbunden. Das Messgerät 10 misst die elektrische Leistung, die über die Anschlussdose 8 an das Fahrzeug 6 über das Verbindungskabel 4 abgegeben wird. Die elektrische Leistung wird über einen elektrischen Anschluss 12 von einem elektrischen Energieversorgungsnetz 14 bezogen.

Gekoppelt an das Messgerät 10 ist eine Recheneinheit 16 mit einer Kommunikationseinheit 16a und einer Signatureinheit 16b. Die Signatureinheit 16b kann eine dem Ladegerät 2 bzw. dem Messgerät 10 zugeordnete eindeutige Identifikation, beispielsweise eine privaten Messgeräteschlüssel (PiM) 18a erfassen. Auch kann ein öffentlicher Messgeräteschlüssel (PuM) 18b erfasst werden.

Die Recheneinheit 16 ist über ein Datennetz 20 mit einer Abrechnungszentrale 22 verbunden.

Ferner ist ein weiterer Computer 23 vorgesehen, der logisch und räumlich von der Abrechnungszentrale 22 getrennt ist. Insbesondere kann der Computer 23 mit dem Datennetz 20, z.B. einem Weitverkehrsnetz, z.B. dem Internet, verbunden sein. Der Computer 23 kann beispielsweise in den Räumen und/oder unter Aufsicht einer Eichbehörde betrieben werden.

Über das Datennetz 20 können Nutzer sowohl auf die Abrechnungszentrale 22 als auch den Computer 23 zugreifen. Bei der Abrechnungszentrale 22 können die Nutzer Rechnungsdaten abrufen. Bei dem Computer 23 können sich Nutzer z.B. öffentliche Messgeräteschlüssel und/oder Programme zum Errechnen einer Vergleichssignatur beschaffen.

In dem Fahrzeug 6 ist neben einer mit einem Anschluss 24 verbundenen Batterie 26 eine Kommunikationseinheit 28 vorgesehen. Die Kommunikationseinheit 28 ermöglicht das Senden und Empfangen von Daten auf dem Verbindungskabel 4. Während des Ladevorgangs des Fahrzeugs 6 an der Ladestation 2 wird Energie von dem Energieversorgungsnetz 14 in die Batterie 26 des Fahrzeugs 6 gespeist. Die Menge der eingespeisten Energie wird mittels des Messgeräts 10 erfasst. Die Energiemenge, beispielsweise ein Zählerstand des Messgerätes 10, als auch andere Daten, wie beispielsweise die Identifikation der Ladestation 2 und/oder die Identifikation des Messgerätes 10, ein Zeitstempel, ein Zeit-Index, ein Status der Ladestation 2 und/oder ein Status des Messgerätes 10, ein Anfangszählerstand, ein Endzählerstand und/oder dergleichen kann an die Abrechnungszentrale 22 übermittelt werden.

Für eine eindeutige Zuordnung des Zählwertes des Messgerätes zu einer Transaktion muss ein Datenpaket gebildet aus Zählerstand und Transaktionskennung mit einer eindeutigen Beschreibung, z.B. einer Signatur, verknüpft werden. Hierzu wird eine Transaktionskennung 19 der Ladestation 2 mitgeteilt.

Dies ist beispielhaft in Fig. 1b gezeigt. Fig. 1b zeigt eine Ladestation 2 mit einem Messgerät 10 mit einem Strommesser 10a. Der Messgerätezählerstand des Strommessers 10a kann durch das Messgerät 10 ausgegeben werden. Dies kann verschlüsselt und signiert erfolgen, wie nachfolgend noch beschrieben wird. Hierzu kann im Messgerät 10 die Signatureinrichtung 12 angeordnet sein. In dem Messgerät 10 kann eine CPU 10b vorhanden sein und der Messgeräteschlüssel 18 aus privatem Messgeräteschlüssel 18a und öffentlichen Messgeräteschlüssel 18b gespeichert sein.

In der Ladestation 2 ist ein Münzautomat 3a angeordnet. Wenn ein anonymer Nutzer die Ladestation zum Laden seines Fahrzeugs nutzen möchte, kann er z.B. am Münzautomaten 3a einen Geldbetrag entsprechend der zu beziehenden Energie bezahlen. Die Ladestation 2 erfasst den Geldbetrag und sendet eine Ladeanforderung zusammen mit der Information über den gezahlten Geldbetrag an die Abrechungszentrale 22. In der Abrechnungszentrale 22 wird die Ladeanforderung empfangen. Daraufhin wird in der Abrechnungszentrale 22 eine Transaktionskennung erstellt. Diese wird zunächst an die Ladestation 2 übermittelt und ggf. über ein Display an dem Münzautomaten 3a ausgegeben.

Anstelle der Verwendung des Münzautomaten 3a könnte der Nutzer ggf. über sin Mobiltelefon 4 eine SMS an die Abrechnugnszentrale senden. In dieser SMS könnte z.B. die Ladestation ID angegeben sein. Ferner könnte mit der SMS eine IMSI an die Abrechnungszentrale übermittelt werden. Für den Fall dass das Mobiltelefon mit einer Prepaid Karte ausgestattet ist, wäre die IMSI eine anonyme Ziffernfolge, die einen Rückschluss auf die Identität des Nutzers nicht zulässt. Die Abrechnungszentrale 22 könnte in Erwiderung auf den Empfang einer solchen SMS eine Transaktionskennung 19 erstellen. Diese Transaktionskennung 19 würde mit einer SMS an den Nutzer zurückgesendet. Beispielsweise könnte die Antwort SMS kostenpflichtig sein, so dass hierüber die Energie abgerechnet werden kann. Die Kosten der SMS würden als Zahlungsinformationen in der Ladestation 2 verwendet werden. Der Nutzer erhält somit die Transaktionskennung 19. Parallel dazu würde die Abrechnungszentrale 22 die Transaktionskennung 19 an die Ladestation 2 mit der Ladestations ID, die ihr in der SMS mitgeteilt wurde, senden.

Nachdem in der Ladestation 2 die Transaktionskennung 19 empfangen wurde, kann ein Ladevorgang freigegeben werden. Die Dauer des Ladevorgangs kann sich aus den Zahlungsinformationen ergeben. Während des Ladens erfasst das Messgerät 10 die Messdaten und erstellt daraus einen Satz von abrechnungsrelevanten Abrechnungsdaten.

Um nun die Abrechnungsdaten fest mit der Transaktionskennung 19 zu verknüpfen, wird vorgeschlagen, dass ein Datenpaket umfassend zumindest den Messgerätezählerstand und die Transaktionskennung 19nach Abschluss des Ladevorgangs signiert an die Abrechnungszentrale 22 übermittelt wird.

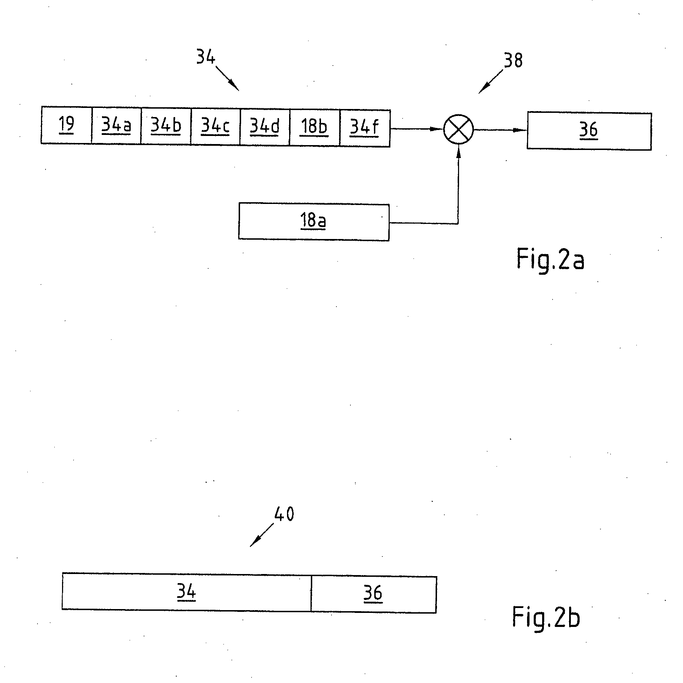

Hierzu übermittelt die Kommunikationseinheit 16 ein Datenpaket, wie es in den Figuren 2 erläutert ist. In dem Datenpaket können die genannten Messgrößen gespeichert werden. In dem Datenpaket kann insbesondere ein öffentlicher Messgeräteschlüssel (PuM) 18b gespeichert werden. Auch können neben dem Datenpaket der öffentliche Messgeräteschlüssel (PuM) 18b und/oder Signaturen zwischen Ladestation 2 und Abrechnungszentrale 22 ausgetauscht werden.

Die Figuren 2 zeigen die Berechnung eines Datenpakets und einer Signatur, welche über das Datennetz 20 zwischen Ladestation 2 und Abrechnungszentrale 22 ausgetauscht werden können.

Fig. 2a zeigt ein beispielhaftes erstes Datenpaket 34, in dem eine Transaktionskennung 19, Zählerstand 34a, optional ein Messgerätestatus 34b, optional eine Messgeräteidentifikation 34c, optional eine Zeitinformation 34d, optional ein öffentlicher Messgeräteschlüssel (PuM) 18b und/oder eventuell weitere Daten 34f in einer binären Zahlenfolge abgespeichert sind. Die Messgeräte-Identifikation 34c kann ein eindeutiger Bezeichner des Messgerätes 10 und/oder der Ladestation 2 sein.

Für eine Authentifizierung des ersten Datenpakets 34 kann eine Signatur 36 erstellt werden. Hierzu wird in einem Rechenschnitt 38 das erste Datenpaket 34 zusammen mit einem privaten Messgeräteschlüssel (PiM) 18a verwendet, um eine Signatur (SD) 36 zu errechnen. So kann z.B. in dem Rechenschritt 38 ein Hash-Wert aus dem ersten Datenpaket bestimmt werden und dieser Hash-Wert kann mit dem privaten Messgeräteschlüssel (PiM) in die Signatur (SD) 36 umgerechnet werden.

Für die Übertragung des ersten Datenpakets 34 an die Abrechnungszentrale 22 wird das erste Datenpaket 34 mit der Signatur 36 in einem Datensatz 40 verpackt. Der Datensatz 40 wird über das Versorgungsnetz 14 oder das Datennetz 20 oder in sonstiger Weise an die Abrechnungszentrale 22 übermittelt.

Fig. 2b zeigt den Datensatz 40 gebildet aus dem ersten Datenpaket 34 und der Signatur 36.

Der Datensatz 40 kann unmittelbar an die Abrechnungszentrale 22 gesendet werden. Die hieraus erhaltenen Daten können für eine Erstellung eines Rechnungsbelegs, wie nachfolgend noch beschrieben wird, verwendet werden. Der Nutzer kann den Rechnungsbeleg unter Verwendung der Signatur 36, der ihm mitgeteilten Transaktionskennung 19 sowie seiner selbst getätigten Notizen auf Authentizität und Integrität überprüfen.

In der Abrechnungszentrale 22 kann mit Hilfe der Signatur (SD) 36 und dem in der Abrechnungszentrale 22 bekannten öffentlichen Messgeräteschlüssels (PuM) 18b der Rechenschritt 38 umgekehrt und/oder erneut durchgeführt werden. Hierdurch kann überprüft werden, ob das Datenpaket 34 fehlerfrei von der Ladestation 2 an die Abrechnungszentrale 22 übermittelt wurde.

Wenn das Datenpaket 34 und die Signatur 36 zusammenpassen, kann dies als Beleg dafür verwendet werden, dass das Datenpaket unverfälscht ist. Da in dem Datenpaket die Transaktionskennung 19 enthalten ist, kann somit sichergestellt werden, dass die bezogene Energie mit der richtigen Transaktion verbunden ist und über die Transaktionskennung kann ein Rechnungsbeleg eingesehen werden.

Für einen Nutzer ist mit Hilfe der ersten Signatur (SD) bzw. dem öffentlichen Messgeräteschlüssels (PuM) 18b auch eine Überprüfung möglich, ob die in der Abrechnungszentrale 22 zu Abrechnungszwecken verwendeten Datenpakete 34 auch tatsächlich zu der Transaktion gehören, die von ihm ausgelöst wurde und von der Ladestation 2 stammen, an denen er Energie bezogen hat.

Hierzu kann der Nutzer von dem Computer 23 den öffentlichen Messgeräteschlüssels (PuM) 18b der Ladestation 2, dessen ID er beim Ladevorgang notiert hat, herunterladen.

Er kann die Ladestations-ID mit einer Ladestations-ID auf seinem Rechnungsbeleg vergleichen. Die auf diese Ladestations-ID bezogenen Rechnungsdaten (Datenpakete) sind in dem Rechnungsbeleg mit einer Signatur versehen. Diese Signatur 36 kann der Nutzer zusammen mit den der Transaktionskennung 19, den von ihm notierten Zeitinformationen und dem geladenen öffentlichen Messgeräteschlüssels (PuM) 18b der Ladestation 2 überprüfen. Hierzu kann der Nutzer ein über den Computer 23 geladenes Programm nutzen.

Die Rechenschritte 38 und 48 können auf asymmetrischen Verschlüsselungsverfahren basieren, welche durch öffentliche und private Schlüssel die Erstellung, den Vergleich und die Validierung von Kryptogrammen ermöglichen.

Dies gewährleistet eine hohe Datenintegrität bei der Abrechnung. Auch ist eine Plausibilitätsüberprüfung möglich. Schließlich wird sichergestellt, dass das Datenpaket 34 unverfälscht in der Abrechnungszentrale 22 empfangen wurde.

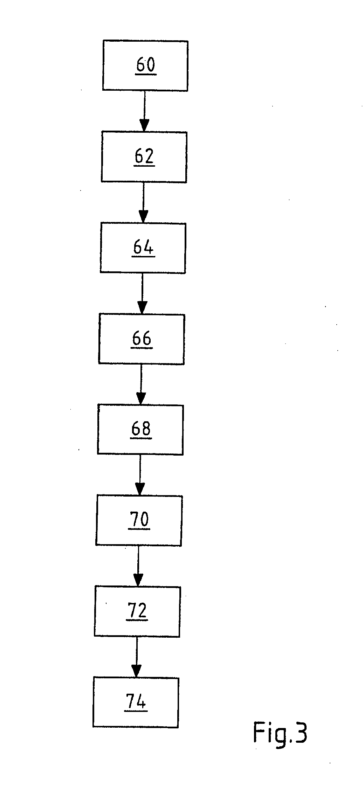

Figur 3 zeigt ein Ablaufdiagramm eines Verfahrens zur Überprüfung der Messdaten durch den Nutzer.

In einem ersten Schritt 60 begibt sich ein Nutzer mit seinem Fahrzeug 6 an eine Ladestation 2.

Um den Ladevorgang zu starten, muss zunächst eine Ladungsanforderung an die Abrechnungszentrale 22 übermittelt werden. Dies kann z.B. wie in Fig. 1b beschrieben erfolgen. Auch kann z.B. durch ein Kartenlesegerät in der Ladestation 2 eine Bankkarte gelesen werden und ein Bezahlvorgang ausgelöst werden. Ist der Bezahlvorgang abgeschlossen, kann diese Information als Zahlungsinformation zusammen mit einer Ladungsanforderung von der Ladestation 2 an die Abrechnungszentrale 22 übermittelt werden.

In der Abrechnungszentrale wird darauf hin in Schritt 62 eine Transaktionskennung 19 erstellt. Diese Transaktionskennung 19 wird an den Nutzer zurück gesendet. Dies kann z.B. durch Ausgabe an einem Display an der Ladestation 2 erfolgen. Somit ist die Transaktionskennung 19 auch der Ladestation 2 bekannt.

Sobald der Ladevorgang beginnt, wird in der Ladestation 2, vorzugsweise im Messgerät 10 möglicherweise aber auch in der Recheneinheit 16 die aktuelle Uhrzeit oder ein Zeitindex sowie das Datum erfasst. Außerdem erfasst die Recheneinheit von dem Messgerät 10 den aktuellen Zählerstand. Darüber hinaus erfasst die Recheneinheit zumindest noch einen Status der Ladestation (z.B. in Ordnung / Fehler) und die Messgeräteidentifikation. Hierbei ist es möglich, dass Messwert, Zeit und Datum sowie Status und Signatur im Messgerät 10 erfasst werden.

Auch ist es möglich, dass Teile der vorgenannten Daten in der Recheneinheit 16 erfasst und das Datenpaket in der Recheneinheit 16 signiert wird.

Parallel dazu kann der Nutzer ebenfalls die ihm mitgeteilte Transaktionskennung 19, die Uhrzeit und das Datum des Beginns des Ladevorgangs notieren. Hierzu nutzt er beispielsweise seine eigene Uhr. Auch kann der Nutzer die Messgeräteidentifikation oder eine Ladestations-ID, die bevorzugt außen an der Ladestation 2 angebracht ist, ablesen und notieren.

In einem nächsten Schritt 64 errechnet die Signatureinheit 16b aus dem Datenpaket 34, welches die oben genannten Informationen enthält, insbesondere die Transaktionskennung 19 und dem Messgeräteschlüssel 18a die Signatur 36.

Das Datenpaket 34 und die Signatur 36 wird anschließend an die Abrechnungszentrale 22 übermittelt.

In einem nächsten Schritt 66 schließt der Nutzer den Ladevorgang ab. Zu diesem Zeitpunkt erfasst die Recheneinheit 16 erneut die aktuelle Uhrzeit oder ein Zeitindex sowie das Datum. Außerdem erfasst die Recheneinheit erneut von dem Messgerät 10 den aktuellen Zählerstand. Darüber hinaus erfasst die Recheneinheit erneut zumindest noch einen Status der Ladestation (z.B. in Ordnung / Fehler) und die Messgeräteidentifikation.

Parallel dazu kann der Nutzer ebenfalls erneut die Uhrzeit und das Datum des Endes des Ladevorgangs notieren. Hierzu nutzt er beispielsweise seine eigene Uhr.

In einem nächsten Schritt 68 errechnet die Signatureinheit 16b aus dem neuen Datenpaket 34, welches die Transaktionskennung 19 und die oben genannten Informationen enthält, und dem Messgeräteschlüssel 18a die neue Signatur 36.

Das neue Datenpaket 34 und die neue Signatur 36 wird in einem nächsten Schritt 70 an die Abrechnungszentrale 22 übermittelt.

In der Abrechnungszentrale 22 werden aus den beiden empfangenen Datenpaketen die rechnungsrelevanten Informationen in Schritt 72 ermittelt.

Für die Nutzer werden für jeden Ladevorgang jeweils ein Rechnungsbeleg erstellt und gespeichert.

Unter Verwendung der Transaktionskennung 19 ist für jeden Ladevorgang ein Rechnugsbeleg erhältlich. Dieser Rechnungsbeleg weist die gesamte bei einem Ladevorgang für einen Tarif bezogene Energiemenge und den Preis aus.

Außerdem weist der Rechnungsbeleg für den Ladevorgang die Start- und Endzeit, das Datum, die Ladestations-ID, die Zählernummer, die Adresse der Ladestation 2, die Zählerstände zu Beginn und zum Ende des Ladevorgangs und die Energiemenge aus.

Darüber hinaus weist der Rechnungsbeleg für jede Startzeit und jede Endzeit die Zählernummer, den Zählerstand, den Messgerätestatus und die Signatur 36 aus. Diese Signatur 36 ist die in der Ladestation 2 berechnete Signatur. Diese Daten stehen auch abrufbar online die Nutzer unter Verwendung der Transaktionskennung 19 zur Verfügung.

Ebenfalls abrufbar zur Verfügung stehen dem Nutzer öffentliche Messgeräteschlüssel.

In einem Schritt 74 kann der Nutzer mit den von ihm notierten Transaktionskennung 19 und Zeitinformationen und Messgeräteidentifikationen die ihm mitgeteilten Signaturen überprüfen. Hierzu kann er die notierten Informationen zusammen mit den mitgeteilten Informationen zur Transaktionskennung 19, zum Zählerstand und Status verwenden, um mit dem öffentlichen Messgeräteschlüssel die Signatur zu prüfen. Hierzu kann er ein ebenfalls abrufbar bereitgestelltes Programm nutzen.

Mit Hilfe des gezeigten Verfahrens ist es möglich, Datenintegrität und Authentizität bei der Übertragung von Messdaten zwischen einer Ladestation und einer Abrechnungszentrale sicherzustellen. Die Verwendung einer Signatur, welche mittels eines ECC-Verschlüsselungsverfahrens erstellt werden kann, und beispielsweise aus einem Hash-Code errechnet werden kann, ermöglicht es, die Authentizität und die Integrität der Messwerte in den Empfangseinrichtungen zu überprüfen. Die Berechnung der Signaturen kann mittels Public-Key-Verfahren erfolgen. Der Vorteil hiervon ist, dass die Datenpakete, die errechnet werden, aufgrund der Signatur nicht unnötig vergrößert werden. Die Länge der Datenpakete ist ein entscheidendes Kriterium für den Datenverkehr zwischen Ladestation 2 und Abrechnungszentrale 22. Die Signatur als auch eine mögliche Verschlüsselung dürfen die Datenpakete nicht zu groß werden lassen, da ansonsten das Datenvolumen zu groß wäre. Für den massenhaften Einsatz eignen sich somit Public-Key-Verfahren in besonderer Weise.

## Patentansprüche

1. Verfahren zur Zuordnung eines von einer Ladestation erfassten Messwertes zu einer Transaktionskennung mit
- Zuordnen einer Transaktionskennung (19) zu einem aktuellen Ladevorgang,
- Freigeben eines Ladestroms bei einem Empfang der Transaktionskennung (19) in der Ladestation (2),
- Erfassen zumindest eines die von einem Fahrzeug (6) von der Ladestation (2) bezogene Energiemenge repräsentierenden Messgerätezählerstands in der Ladestation (2),
- Erstellen eines Datenpakets (34) umfassend zumindest den Messgerätezählerstand und die Transaktionskennung (19),
- Erstellen einer eindeutigen Beschreibung des Datenpakets (34),
- Übermitteln zumindest des Datenpakets (34) und der Beschreibung (36) an die Abrechnungszentrale (22).

2. Verfahren nach Anspruch 1, **dadurch gekennzeichnet, dass** eine einem Nutzer mitgeteilte Transaktionskennung (19) von einer Abrechnungszentrale (22) empfangen wird oder dass die Transaktionskennung (19) in der Ladestation erstellt wird oder von einem Nutzer empfangen wird und an die Abrechnungszentrale (22) übermittelt wird.

3. Verfahren nach Anspruch 1, **dadurch gekennzeichnet, dass** in der Ladestation (2) eine Zahlungsinformation erstellt wird und dass die erstellte Zahlungsinformation an die Abrechnungszentrale (22) übermittelt wird.

4. Verfahren nach einem der Ansprüche 1 bis 3, **dadurch gekennzeichnet, dass** im Anschluss an die Übermittlung der Zahlungsinformation die Transaktionskennung (19) in der Ladestation (2) empfangen wird.

5. Verfahren nach einem der Ansprüche 1 bis 2, **dadurch gekennzeichnet, dass** die Transaktionskennung (19) teilweise aus Nutzerinformationen gebildet ist und/oder dass die Transaktionskennung (19) teilweise aus einer von einem Mobiltelefon oder einer Mobilfunkkarte des Nutzers ermittelten Nutzerinformationen gebildet ist und/oder dass die Transaktionskennung auf einer Guthabenkarte abgedruckt ist und/oder dass die Transaktionskennung von einem Geldautomaten erhalten wird.

6. Verfahren nach einem der Ansprüche 1 bis 5, **dadurch gekennzeichnet, dass** das Datenpaket (34) neben der Transaktionskennung (19) und dem Messgerätezählerstand zumindest eine der Informationen aus
A) einer Messgeräteidentifikation,
B) einem Messgerätestatus,
C) Zeitinformationen,
D) Datumsinformationen,
E) einem öffentlichen Messgeräteschlüssel (34e);
F) einem Zeit-Index;
G) eine Nutzerinformationen;
H) eine Zahlungsinformation
enthält.

7. Verfahren nach einem der Ansprüche 1 bis 6, **dadurch gekennzeichnet, dass** die eindeutige Beschreibung in dem Messgerät (10) erstellt wird.

8. Verfahren zur Zuordnung eines von einer Ladestation erfassten Messwertes zu einer Transaktionskennung mit
- Empfangen eines Datenpakets (34) umfassend zumindest einen Messgerätezählerstand und die Transaktionskennung (19) von einem die von einem Fahrzeug (6) von der Ladestation (2) bezogene Energiemenge messenden Messgerät (10) in einer Abrechnungszentrale (22),
- Empfangen einer eindeutigen Beschreibung des Datenpaktes (34) von der Ladestation (2) in der Abrechnungszentrale (22),
- Überprüfen der eindeutigen Beschreibung mit Hilfe des empfangenen Datenpakets (34),
- Abspeichern der aus dem Messgerätezählerstand ermittelten bezogenen Energiemenge zusammen mit der in dem Datenpaket enthaltenen Transaktionskennung (19),
- Bereitstellen eines durch zumindest die Transaktionskennung (19) geschützten Zugriffs auf zumindest die aus dem Messgerätezählerstand ermittelte bezogene Energiemenge.

9. Verfahren nach einem der Ansprüche 1 bis 9, **dadurch gekennzeichnet, dass** eine Transaktionskennung (19) in der Abrechnungszentrale (22) erstellt wird und dass die erstellte Transaktionskennung (19) an einen Nutzer und eine Ladestation (2) übermittelt wird.

10. Verfahren nach einem der Ansprüche 1 bis 9, **dadurch gekennzeichnet, dass** eine Ladeanforderung von einem Nutzer empfangen wird und dass im Anschluss an die empfangene Ladeanforderung die Transaktionskennung (19) erstellt wird und/oder dass aus der Ladeanforderung zumindest die Quelle der Ladeanforderung beschreibende Quellinformationen ermittelt werden und dass die Transaktionskennung (19) zumindest teilweise die Quellinformationen enthält.

11. Verfahren nach einem der Ansprüche 1 bis 10, **dadurch gekennzeichnet, dass** die Transaktionskennung (19) zumindest teilweise aus einer temporären Kundenkennung gebildet ist, wobei die temporäre Kundenkennung vorzugsweise in der Abrechnungszentrale (22) erstellt wird.

12. Verfahren nach einem der Ansprüche 1 bis 10, **dadurch gekennzeichnet, dass** ein Rechnungsbeleg aus zumindest dem empfangenen Messgerätezählerstand erstellt wird und dass ein Zugriff auf den Rechnungsbeleg gesichert über die Transaktionskennung (19) über ein Weitverkehrsnetz bereitgestellt wird.

13. Vorrichtung zur Zuordnung eines von einer Ladestation erfassten Messwertes zu einer einem aktuellen Ladevorgang zugeordneten Transaktionskennung mit
- einer Messeneinrichtung (10) eingerichtet zum Erfassen zumindest eines die von einem Fahrzeug (6) von der Ladestation (2) bezogenen Energiemenge repräsentierenden Messgerätezählerstands in der Ladestation (2),
- Empfangsmittel (3) eingerichtet zum Empfangen der Transaktionskennung (19),
- Rechenmitteln (16) eingerichtet zum Erstellen eines Datenpakets (34) umfassend zumindest den Messgerätezählerstand und die Transaktionskennung (19), und zum Erstellen einer eindeutigen Beschreibung des Datenpakets,
- und einer Kommunikationseinrichtung (16a) eingerichtet zum Übermitteln zumindest des Datenpakets (34) und der eindeutigen Beschreibung an die Abrechnungszentrale (22).

14. Vorrichtung zur Zuordnung eines von einer Ladestation erfassten Messwertes zu einer einem aktuellen Ladevorgang zugeordneten Transaktionskennung mit
- Empfangsmitteln eingerichtet zum Empfangen eines Datenpakets (34) umfassend zumindest einen Messgerätezählerstand von einem die von einem Fahrzeug (6) von der Ladestation (2) bezogene Energiemenge messenden Messgerät (10) und die Transaktionskennung (19), und zum Empfangen einer eindeutigen Beschreibung des Datenpaktes (34) in einer zentralen Abrechnungszentrale (22), und
- Auswertungsmittel eingerichtet zum Auswerten der eindeutigen Beschreibung und zum Ermitteln der Transaktionskennung (19) aus dem Datenpaket (24),
- Speichermittel eingerichtet zum Abspeichern der aus dem Messgerätezählerstand ermittelten bezogenen Energiemenge zusammen mit der in dem Datenpaket enthaltenen Transaktionskennung (19) und
- Bereitstellungsmittel eingerichtet zum Bereitstellen eines durch zumindest die Transaktionskennung (19) geschützten Zugriffs auf zumindest die aus dem Messgerätezählerstand ermittelte bezogene Energiemenge.

## Claims

1. Method for assigning a measured value, obtained by a charging station, to a transaction identifier, comprising
- assigning a transaction identifier (19) to a current charging procedure,
- clearing a charging current upon receipt of the transaction identifier (19) in the charging station (2),
- obtaining in the charging station (2) at least one measuring device meter reading, representing the amount of energy drawn by a vehicle (6) from the charging station (2),
- compiling a data packet (34) comprising at least the measuring device meter reading and the transaction identifier (19),
- creating a unique description of the data packet (34),
- transmitting at least the data packet (34) and the description (36) to the accounting centre (22).

2. Method according to Claim 1, **characterised in that** a transaction identifier (19) given to a user is received by an accounting centre (22) or **in that** the transaction identifier (19) is created in the charging station or is received by a user and is transmitted to the accounting centre (22).

3. Method according to Claim 1, **characterised in that** payment information is prepared in the charging station (2) and **in that** the prepared payment information is transmitted to the accounting centre (22).

4. Method according to any one of Claims 1 to 3, **characterised in that** the transaction identifier (19) is received in the charging station (2) following the transmission of the payment information.

5. Method according to either Claim 1 or 2, **characterised in that** the transaction identifier (19) is partly formed from user information and/or **in that** the transaction identifier (19) is partly formed from user information determined from a mobile telephone or a mobile phone card belonging to the user and/or **in that** the transaction identifier is printed on a prepaid card and/or **in that** the transaction identifier is obtained from a cash dispenser.

6. Method according to any one of Claims 1 to 5, **characterised in that** in addition to containing the transaction identifier (19) and the measuring device meter reading, the data packet (34) also contains at least one item of information from
A) a measuring device identification,
B) a measuring device status,
C) time information,
D) date information,
E) a public measuring device key (34e),
F) a time index,
G) user information,
H) payment information.

7. Method according to any one of Claims 1 to 6, **characterised in that** the unique description is created in the measuring device (10).

8. Method for assigning a measurement reading, obtained by a charging station, to a transaction identifier, comprising
- receiving in an accounting centre (22) a data packet (34) comprising at least one measuring device meter reading and the transaction identifier (19) from a measuring device (10) measuring the amount of energy drawn by a vehicle (6) from the charging station (2),
- receiving a unique description of the data packet (34) from the charging station (2) in the accounting centre (22),
- checking the unique description using the data packet (34) which is received,
- saving the drawn amount of energy which is determined from the measuring device meter reading, together with the transaction identifier (19) contained in the data packet,
- providing access which is protected by at least the transaction identifier (19), to at least the drawn amount of energy determined from the measuring device meter reading.

9. Method according to any one of Claims 1 to 9, **characterised in that** a transaction identifier (19) is created in the accounting centre (22) and **in that** the created transaction identifier (19), is transmitted to a user and to a charging station (2).

10. Method according to any one of Claims 1 to 9, **characterised in that** a charging request from a user is received and **in that** the transaction identifier (19) is created following the received charging request and/or **in that** at least source information describing the source of the charging request is determined from the charging request and **in that** the transaction identifier (19) at least partly contains the source information.

11. Method according to any one of Claims 1 to 10, **characterised in that** the transaction identifier (19) is at least partly formed from a temporary client identifier, said temporary client identifier preferably being created in the accounting centre (22).

12. Method according to any one of Claims 1 to 10, **characterised in that** an invoice document is prepared from at least the received measuring device meter reading and **in that** access to the invoice document is provided via a wide-area network in a safeguarded manner by the transaction identifier (19).

13. Device for assigning a measurement reading recorded by a charging station to a transaction identifier assigned to a current charging procedure, comprising
- a measuring means (10) configured for obtaining in the charging station (2) at least one measuring device meter reading representing the amount of energy drawn by a vehicle (6) from the charging station (2),
- receiving means (3) configured for receiving the transaction identifier (19),
- computational means (16) configured for preparing a data packet (34) comprising at least the measuring device meter reading and the transaction identifier (19), and for preparing a unique description of the data packet,
- and a communication means (16a) configured for transmitting at least the data packet (34) and the unique description to the accounting centre (22).

14. Device for assigning a measurement reading recorded by a charging station to a transaction identifier assigned to a current charging procedure, comprising
- receiving means configured for receiving a data packet (34) comprising at least one measuring device meter reading from a measuring device (10) measuring the amount of energy drawn by a vehicle (6) from the charging station (2), and the transaction identifier (19), and for receiving a unique description of the data packet (34) in a central accounting centre (22), and
- evaluation means configured for evaluating the unique description and for determining the transaction identifier (19) from the data packet (34),
- memory means configured for saving the drawn amount of energy which is determined from the measuring device meter reading, together with the transaction identifier (19) contained in the data packet, and
- provision means configured for providing access protected by at least the transaction identifier (19), to at least the drawn amount of energy determined from the measuring device meter reading.

## Revendications

1. Procédé pour attribuer à un indicatif de transaction une valeur de mesure, détectée par une station de charge, ledit procédé comprenant
- l'attribution d'un indicatif de transaction (19) à un processus de charge actuel,
- libération d'un courant de charge lors d'une réception de l'indicatif de transaction (19) dans la station de charge (2),
- détection d'au moins un état du compteur de l'appareil de mesure, qui représente la quantité d'énergie soutirée de la station de charge (2) par un véhicule automobile (6),
- établissement d'un paquet de données (34) qui comprend au moins l'état du compteur de l'appareil de mesure et l'indicatif de transaction (19),
- établissement d'une description univoque du paquet de données (34),
- communication d'au moins le paquet de données (34) et de la description (36) à la centrale de comptabilisation (22).

2. Procédé selon la revendication 1,
**caractérisé en ce que** l'indicatif de transaction (19), communiqué à un utilisateur, est reçu par une centrale de comptabilisation (22) ou que l'indicatif de transaction (19) est établi dans la station de charge ou reçu par un utilisateur et communiqué à la centrale de comptabilisation (22).

3. Procédé selon revendication 1,
**caractérisé en ce que**, dans la station de charge (2), est établi une information de paiement et que ladite information de paiement établie est communiquée à la centrale de comptabilisation (22).

4. Procédé selon l'une des revendications 1 à 3,
**caractérisé en ce que**, suite à la communication de l'information de paiement, l'indicatif de transaction (19) est reçu dans la station de charge (2).

5. Procédé selon l'une des revendications 1 à 2,
**caractérisé en ce que** l'indicatif de transaction (19) est partiellement formé à partir d'informations concernant l'utilisateur et / ou que l'indicatif de transaction (19) est formé à partir d'un téléphone mobile ou d'une carte de téléphone mobile de l'utilisateur

6. Procédé selon l'une des revendications 1 à 5,
**caractérisé en ce que** le paquet de données (34) contient, à côté de l'indicatif de transaction (19) et de l'état du compteur de l'appareil de mesure, au moins l'une des informations concernant
A) une identification de l'appareil de mesure,
B) un état de l'appareil de mesure,
C) des informations de temps,
D) des informations de date,
E) une clé publique de l'appareil de mesure (34 e),
F) un index de temps,
G) une information de l'utilisateur,
H) une information de paiement.

7. Procédé selon l'une des revendications 1 à 6,
**caractérisé en ce que** la description univoque est établie dans l'appareil de mesure (10).

8. Procédé pour attribuer à un indicatif de transaction une valeur de mesure, qui est détectée par une station de charge, lequel comprend :
- la réception, dans une centrale de comptabilisation (22), d'un paquet de données (34), qui contient au moins un état du compteur de l'appareil de mesure et l'indicatif de transaction (19) d'un appareil de mesure (10), qui mesure la quantité d'énergie soutirée de la station de charge (2) par un véhicule automobile (6) de la station de charge (2),
- la réception d'une description univoque du paquet de données (34) de la station de charge (2), dans la centrale de comptabilisation (22),
- la vérification de la description univoque à l'aide du paquet de données (34) reçu,
- la mémorisation de la quantité d'énergie soutirée, détectée à partir de l'état du compteur de l'appareil de mesure, en commun avec l'indicatif de transaction (19) contenu dans le paquet de données,
- accessibilité, accès protégée au moins par l'indicatif de transaction (19), à au moins la quantité d'énergie soutirée, détectée à partir de l'état du compteur de l'appareil de mesure.

9. Procédé selon l'une des revendications 1 à 8,
**caractérisé en ce qu'**un indicatif de transaction (19) est établi dans la centrale de comptabilisation (22) et q u e l'indicatif de transaction (19) établi est communiqué à un utilisateur et à une station de charge (2).

10. Procédé selon l'une des revendications 1 à 9,
**caractérisé en ce qu'**une demande de charge est reçue par l'utilisateur et que, suite à la demande de charge reçue, l'indicatif de transaction (19) est établi et / ou que des informations de source, décrivant au moins la source, sont déterminées à partir de la demande de charge et q u e l'indicatif de transaction (19) contient, au moins partiellement, les informations de source.

11. Procédé selon l'une des revendications 1 à 10,
**caractérisé en ce que** l'indicatif de transaction (19) est formé, au moins partiellement, à partir d'un indicatif de client temporaire, sachant que l'indicatif de client temporaire est établi, de préférence, dans la centrale de comptabilisation (22).

12. Procédé selon l'une des revendications 1 à 10,
**caractérisé en ce que**, partant au moins de l'état du compteur de l'appareil de mesure reçu, une pièce de comptabilité est établie et qu'un accès à ladite pièce de comptabilité, sécurisé par l'indicatif de transaction (19), est disponible sur un réseau de communication à grande distance.

13. Procédé pour attribuer à un indicatif de transaction une valeur de mesure, détectée par une station de charge, lequel comprend :
- un dispositif de mesure (10), qui est aménagé dans la station de charge (2) pour la saisie d'au moins un état du compteur de l'appareil de mesure qui représente une quantité d'énergie soutirée de la station de charge (2) par un véhicule automobile (6),
- des moyens de réception (3), qui sont aménagés pour la réception de l'indicatif de transaction (19),
- des moyens de calcul (16) aménagés pour l'établissement d'un paquet de données (34), qui comprend au moins l'état du compteur de l'appareil de mesure et l'indicatif de transaction (19), et pour l'établissement d'une description univoque du paquet de données, et
- un dispositif de communication (16a), qui est aménagé pour communiquer au moins le paquet de données (34) et la description univoque à la centrale de comptabilisation (22).

14. Procédé pour attribuer à un indicatif de transaction, associé à un processus de charge actuel, une valeur de mesure, détectée par une station de charge, lequel comprend :
- des moyens de réceptions, qui sont aménagés pour la réception d'un paquet de données (34) comprenant au moins un l'état du compteur d'un appareil de mesure (10), qui mesure la quantité d'énergie soutirée de la station de charge (2) par un véhicule automobile (6), et l'indicatif de transaction (19), et pour la réception d'une description univoque du paquet de données (34) dans une centrale de comptabilisation (22), et
- des moyens d'évaluation pour l'évaluation de la description univoque et pour la détection de l'indicatif de transaction (19) à partir du paquet de données (34),
- des moyens de mémorisation pour la mémorisation de la quantité d'énergie soutirée, détectée à partir de l'état du compteur de l'appareil de mesure, en commun avec l'indicatif de transaction (19) contenu dans le paquet de données, et
- des moyens d'accessibilité, qui sont aménagés pour la mise à disposition d'un accès, protégée au moins par l'indicatif de transaction (19), à au moins la quantité d'énergie soutirée, détectée à partir de l'état du compteur de l'appareil de mesure.
